# EUROPÄISCHE PATENTSCHRIFT

(11) **EP 0 865 127 B1**
(45) Veröffentlichungstag und Bekanntmachung des Hinweises auf die Patenterteilung: **23.04.2003**
(21) Anmeldenummer: 98103290.7
(22) Anmeldetag: 25.02.1998
(51) Int. Cl.: H02B 1/052

(54) **Verteilungsanlage mit Distanzelement**
Distribution system with a distance element
Système de distribution avec un élément de distance

(30) Priorität: 10.03.1997 DE 19709813
(43) Veröffentlichungstag der Anmeldung: 16.09.1998
(73) Patentinhaber: SIEMENS AKTIENGESELLSCHAFT, 80333 München (DE)
(72) Erfinder: Eismann, Georg, 93138 Lappersdorf (DE); Fischer, Elmar, 93051 Regensburg (DE); Schweiger, Reinhard, Dipl.-Ing. (FH), 93059 Regensburg (DE); Weber, Christoph, Dipl.-Ing. (FH), 84034 Landshut (DE)

(56) Entgegenhaltungen:
- EP-A- 0 327 385
- EP-A- 0 359 677
- EP-A- 0 437 124
- EP-A- 0 454 019
- FR-A- 2 612 340
- US-A- 4 790 778

## Beschreibung

Die Erfindung bezieht sich auf eine Verteilungsanlage gemäß Oberbegriff des Anspruchs 1. Aus der EP-A-0 327 385 ist hierzu ein Halterungsaufbau für elektrische Geräte bekannt, bei dem die Montage der Geräte ohne Demontage einer zugehörigen Sammelschiene erfolgt. Ferner ist aus der FR-A-2 612 340 eine aufgeteilte Anschlussklemme bekannt.

Um Verdrahtungsaufwand zu sparen, ist es bei Stromverteilerund Schaltanlagen, also bei Verteilungsanlagen, vorteilhaft, Sammelschienen einzusetzen. Dadurch kann das sonst aufwendige Querverdrahten mit Drahtbrücken einer oder mehrerer Außenleiter oder Nulleiter zur Einspeisung der einzelnen Schaltgeräte vermieden werden. Zusätzlich zur Verbindung der einzelnen Geräte durch Verschienung sind jedoch die Außenleiter bzw. der Nulleiter mindestens einmal einzuspeisen. Das kann durch zusätzliche Einspeisungsklemmen erfolgen, was jedoch den Nachteil aufweist, dass separate Klemmen in Lagerhaltung und Montage aufwendig sind.

In der Regel verwendet man daher sogenannte Kombiklemmen. Derartige Klemmen können sowohl die Einspeiseleitungen als auch die Anschlusselemente der Sammelschiene aufnehmen. Üblicherweise sind derartige Sammelschienen mit kammartigen Anschlussenden versehen, die bei Sicht auf die Verteilungsanlage oberhalb der Einspeiseleitungen liegen. Verdeckte Leitungen haben für den Installateur jedoch vielfältige Nachteile:

Beim Anklemmen der Speiseleitung ist die Klemme schwer zugänglich und es ist nicht sicher erkennbar, ob der Leiter richtig eingeführt ist. Bei Veränderungen bei der Einspeisung muß deshalb die Sammelschiene in der Regel abgenommen und wieder montiert werden.

Weiter ist es zum Lösen eines Installationsgerätes aus dem Verband in der Regel erforderlich, die Sammelschiene von allen seitlich angereihten Installationsgeräten abzunehmen. Es ist zwar eine Verteileranlage bekannt, bei der es mit einer speziellen Sammelschiene und besonderen einzeln steckbaren Anschlußelementen möglich ist, einzelne Installationsgeräte aus dem Verband zu lösen. Derartige Sammelschienen stellen jedoch Sonderkonstruktionen dar (DE-A-40 21 825).

Der Erfindung liegt die Aufgabe zugrunde, eine Verteilungsanlage zu entwickeln, deren Installationsgeräte aus einem Verband seitlich angereihter Installationsgeräte und dort angeschlossener Sammelschiene leichter gelöst werden können.

Die Lösung der geschilderten Aufgabe erfolgt durch eine Verteilungsanlage nach Anspruch 1. Zwischen dem Montagefeld für Installationsgeräte und dem Montagefeld für Sammelschienen ist in der Verteilungsanlage ein Distanzelement angeordnet, das so positioniert und bemessen ist, daß zwischen einem Installationsgerät und einer Sammelschiene so viel Raum verbleibt, daß bei einem Halteschieber in Freistellung das Installationsgerat über die Haltenase ausgehoben werden kann.

Das Distanzelement, das als Rippe auf dem Boden der Verteilungsanlage ausgebildet sein kann, stellt also sicher, daß das Installationsgerät an seinen Schmalseiten so viel Raum bzw. Abstand behält, daß es über seine Haltenase in Richtung auf die Sammelschiene ausgehoben werden kann.

Nach einer Weiterbildung ist vorgesehen, daß zumindest eine Anschlußklemme zwei übereinanderliegende Anschlußöffnungen bildet, von denen die untere zum Anschließen von Sammelschienen ausgebildet ist und die obere in einer frei zugänglich bleibenden Höhe angeordnet ist. Anzuschließende Leiter können dann bei Aufsicht auf die Verteilung oberhalb der Sammelschienenanschlüsse gut sichtbar angeschlossen werden.

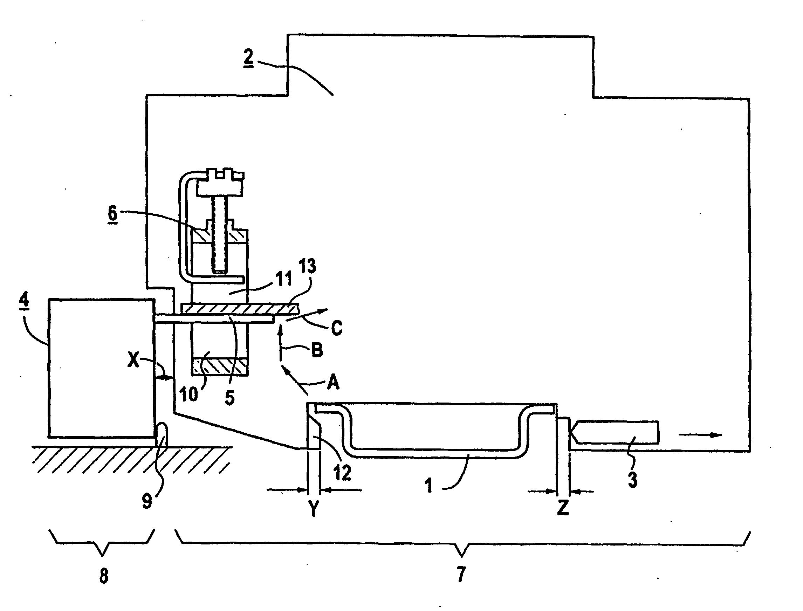

Die Erfindung soll nun anhand eines in der Zeichnung grob schematisch wiedergegebenen Ausführungsbeispiels näher erläutert werden:

In der Zeichnung ist eine Verteilungsanlage mit einer Tragschiene 1 und einem schematisch und teilweise in Schnittansicht wiedergegebenem Installationsgerät 2 angeordnet. Der Halteschieber 3 des Installationsgerätes 2 ist in die Freistellung zurückgezogen. Gegenüberliegend zum Halteschieber 3 weist das Installationsgerät 2 eine Haltenase 12 auf. Die Einspeisung des Installationsgerätes 2 und weiterer benachbarter angereihter Installationsgeräte erfolgt über eine Sammelschiene 4, wobei jeweils ein Anschlußelement 5 der Sammelschiene in eine Anschlußklemme 6 eingeführt ist. Die Anschlußöffnung für ein Anschlußelement 5 der Anschlußklemme 6 ist im geöffneten Zustand wiedergegeben.

Zwischen dem Montagefeld 7 für Installationsgeräte und dem Montagefeld 8 für Sammelschienen 4 ist in der Verteilungsanlage ein Distanzelement 9 angeordnet. Dieses ist so positioniert und bemessen, daß zwischen einem Installationsgerät 2 und einer Sammelschiene 4 soviel Raum bzw. Abstand X verbleibt, daß bei einem Halteschieber 3 in Freistellung das Installationsgerät 2 über die Haltenase 12 mit der Hubweite Y ausgehoben werden kann. Die Bewegungen für das Ausheben sind durch die Bewegungsrichtungen A,B,C veranschaulicht. Verständlicherweise ist die Öffnung zum Einführen des Anschlußelementes 5 in die Anschlußklemme 6 so weit öffenbar, daß das Ausheben nicht behindert wird. Das Ausheben wird gefördert durch eine Freisparung mit der Weite Z, die im Gerätegehäuse knapp unterhalb des Tragschienenrandes ausgebildet ist. Direkt am Tragschienenrand besteht dann ein Anschlag für die Tragschiene, wodurch das Installationsgerät 2 bei der Stellung des Halteschiebers in seiner Haltestellung sicher gehalten wird. Wenn der Halteschieber in seine Freistellung nach Zeichnung überführt wird, kann das Installationsgerät dann auf der Seite des Halteschiebers durch Bewegung nach links freigehoben werden. Diese Vorkehrung ist vorteilhaft, wenn die Anschlußklemme 6 durch ein ortsfestes Zwischenstück 13 ein Absenken der zum Halteschieber 3 gegenüberliegenden Seite des Installationsgerätes 2 infolge einer entsprechenden Drehbewegung nach links behindern könnte. Vorteilhafterweise ist die Weite Z der Freisparung etwas größer als die Hubweite Y. Die Behinderung könnte sonst auftreten, wenn eine Sammelschiene 4 mit einem festen Anschlußelement 5 eingreift. Die Öffnung der Anschlußklemme 6 braucht jedoch nicht so weit zu sein, wie es erforderlich wäre, wenn das Distanzelement 9 nicht vorgesehen wäre.

Im Ausführungsbeispiel ist das Distanzelement 9 als Rippe auf dem Boden der Verteilungsanlage ausgebildet. Es genügt, wenn das Distanzelement 9 an der Sammelschiene 4 anliegt und dadurch den Abstand der Sammelschiene im Installationsgerät 2 vorgibt. Wenn nicht andere Maßnahmen getroffen sind, die das Ausheben des Installationsgerätes 2 begünstigen, ist es erforderlich, daß der Abstand X etwas größer ist als die Hubweite Y zum Ausheben des Installationsgerätes 2 vom Rand der Tragschiene 1.

Im Ausführungsbeispiel weist die Anschlußklemme 6 zwei übereinanderliegende Anschlußöffnungen auf, die eine untere Anschlußöffnung 10 für ein Anschlußelement und eine obere Anschlußöffnung 11 für anzuschließende Leiter. In der AnschlußÖffnung 11 eingeführte Leiter kommen oberhalb der Sammelschiene 4 zu liegen und bleiben gut sichtbar. Das ortsfeste Zwischenstück 13 sorgt für eine vorgegebene Lage.

## Patentansprüche

1. Verteilungsanlage, bei der Installationsgeräte (2) auf zumindest einer Tragschiene (1) mittels einer Haltenase (12) und eines Halteschiebers (3) in einem Montagefeld (7) für Installationsgeräte aufschnappbar sind, wozu der Halteschieber (3) zwischen einer Freistellung und einer Haltestellung verschieblich ist, und bei der die Einspeisung der Installationsgeräte (2) über Sammelschienen (4) erfolgen kann, die in einem Montagefeld (8) für Sammelschienen anordnenbar ist, wobei jeweils ein Anschlußelement (5) der Sammelschiene (4) in eine Anschlußklemme (6) eines Installationsgerätes einführbar ist, **dadurch gekennzeichnet,**
**daß** zwischen dem Montagefeld (7) für Installationsgeräte (2) und dem Montagefeld (8) der Sammelschienen (4) in der Verteilungsanordnung ein Distanzelement (9) angeordnet ist, das so positioniert und bemessen ist, daß zwischen einem Installationsgerät (2) und einer Sammelschiene (4) so viel Abstand (X) verbleibt, daß bei einem Halteschieber (3) in Freistellung das Installationsgerät (2) über die Haltenase (12) ausgehoben werden kann.

2. Verteilungsanlage nach Anspruch 1,
**dadurch gekennzeichnet,**
**daß** das Distanzelement (9) eine Rippe auf dem Boden der Verteilungsanlage ist, an der Sammelschienen (4) anliegend auf einen solchen Abstand zu den Installationsgeräten (2) gehalten werden, der größer als die Aushubweite (Y) der Haltenase (12) ist.

3. Verteilungsanlage nach Anspruch 1 oder 2,
**dadurch gekennzeichnet,**
**daß** zumindest eine Anschlußklemme (6) zwei übereinanderliegende Anschlußöffnungen bildet, von denen die untere (10) zum Anschließen von Sammelschienen (4) und die obere (11) in einer frei zugänglich bleibenden Höhe angeordnet ist.

## Claims

1. Distribution unit in which installation devices (2) can be snapped onto at least one support bar (1) by means of a retaining lug (12) and a retaining slider (3) in a mounting zone (7) for installation devices, for which purpose the retaining slider (3) can be moved between a release position and a retaining position and in which the installation devices (2) can be supplied via busbars (4), which can be located in a mounting zone (8) for busbars, so that each of the connecting elements (5) on the busbar (4) can be inserted into a connecting terminal (6) of an installation device, **characterised in that** a spacer element (9) is located between the mounting zone (7) for installation devices (2) and the mounting zone (8) of the busbars (4) in the distribution arrangement, and is positioned and dimensioned such that enough clearance (X) remains between an installation device (2) and a busbar (4), so that the installation device (2) can be lifted out over the retaining lug (12) when a retaining slider (3) is in the release position.

2. Distribution unit according to Claim 1, **characterised in that** the spacer element (9) is a rib on the base of the distribution unit, at which busbars (4) are retained at a distance from the installation devices (2) which is greater than the lifting width (Y) of the retaining lug (12).

3. Distribution unit according to Claim 1 or 2, **characterised in that** at least one connecting terminal (6) forms two connecting openings, one on top of the other, of which the lower one (10) is to connect busbars (4) and the upper one (11) is located at a height which remains freely accessible.

## Revendications

1. Système de distribution dans lequel des appareils d'installation (2) peuvent être fixés sur au moins un profilé support (1) au moyen d'un taquet de maintien (12) et d'un verrou de maintien (3) dans une zone de montage (7) pour appareils d'installation, le verrou de maintien (3) étant mobile à cet effet entre une position libre et une position de maintien, et dans lequel l'alimentation des appareils d'installation (2) peut s'effectuer par l'intermédiaire de barres collectrices (4) qui peuvent être disposées dans une zone de montage (8) pour barres collectrices, un élément de connexion (5) de la barre collectrice (4) pouvant être introduit respectivement dans une borne de connexion (6) d'un appareil d'installation, **caractérisé par le fait que**, entre la zone de montage (7) pour appareils d'installation (2) et la zone de montage (8) des barres collectrices (4), il y a dans le système de distribution un élément d'écartement (9) qui est dimensionné et positionné de telle sorte qu'il reste entre un appareil d'installation (2) et une barre collectrice (4) suffisamment de distance (X) pour que l'appareil d'installation (2) puisse être soulevé au-dessus du taquet de maintien (12) lorsqu'un verrou de maintien (3) est en position libre.

2. Système de distribution selon la revendication 1,
**caractérisé par le fait que** l'élément d'écartement (9) est une nervure sur le fond du système de distribution, nervure sur laquelle sont maintenues des barres collectrices (4) à une distance des appareils d'installation (2) qui est plus grande que l'amplitude de levée (Y) du taquet de maintien (12).

3. Système de distribution selon la revendication 1 ou 2,
**caractérisé par le fait qu'**au moins une home de connexion (6) forme deux trous de connexion superposés, le trou inférieur (10) étant conçu pour connecter des barres collectrices (4) et le trou supérieur (11) étant disposé à une hauteur restant librement accessible.
